# EUROPEAN PATENT SPECIFICATION

(11) **EP 3 979 396 B1**
(45) Date of publication and mention of the grant of the patent: **19.11.2025**
(21) Application number: 20874987.9
(22) Date of filing: 23.09.2020
(51) Int. Cl.: H01M 10/658, H01M 50/204, H01M 50/505

(54) **BATTERY MODULE INCLUDING HEAT INSULATION MEMBER AND BATTERY PACK INCLUDING THE SAME**
BATTERIEMODUL MIT EINEM WÄRMEDÄMMENDEN ELEMENT UND AKKUSATZ DAMIT
MODULE DE BATTERIE COMPRENANT UN ÉLÉMENT D'ISOLATION THERMIQUE ET BLOC-BATTERIE LE COMPRENANT

(30) Priority: 10.10.2019 KR 20190125091
(43) Date of publication of application: 06.04.2022
(73) Proprietor: LG Energy Solution, Ltd., Seoul 07335 (KR)
(72) Inventor: CHO, Young Bum, Daejeon 34122 (KR); KIM, Seung Joon, Daejeon 34122 (KR)
(74) Representative: Plasseraud IP
(86) International application number: PCT/KR2020/012841
(87) International publication number: WO 2021/071138

(56) References cited:
- WO-A1-2018/221004
- CN-U- 207 800 738
- JP-A- 2013 246 920
- JP-A- 2013 246 920
- KR-A- 20130 064 031
- KR-A- 20130 064 031
- KR-A- 20170 031 087
- KR-B1- 101 664 590

## Description

### [Technical Field]

This application claims the benefit of priority to Korean Patent Application No. 2019-0125091 filed on October 10, 2019.

The present invention relates to a battery module including a heat insulation member and a battery pack including the same, and more particularly to technology capable of blocking, in advance, flames generated due to outbreak of fire in a battery module by adding a heat insulation member outside a bus bar connected to electrode leads.

### [Background Art]

A secondary battery has different configurations depending on output and capacity required in fields or products to which the secondary battery is applied. For example, small mobile devices, such as a mobile phone, a digital camera, and a laptop computer use a single battery cell or a small battery pack including about ten battery cells per device so as to correspond to a small, light, and thin trend of corresponding products. On the other hand, medium or large devices, such as an electric bicycle, an electric vehicle, and a hybrid electric vehicle, use a medium or large battery pack including a plurality battery cells electrically connected to each other due to necessity of high output and large capacity.

In general, the size and weight of a battery pack are directly related to the accommodation space and output of a corresponding medium or large device, and therefore manufacturers are trying to manufacture small and light battery packs.

During charging and discharging of the secondary battery, heat is generated from the secondary battery, whereby the temperature of the secondary battery increases. In the case in which the secondary battery abnormally operates or in the case in which the internal structure of the secondary battery is damaged by external impact, combustion and outbreak of fire may occur in the secondary battery.

In particular, an electrode terminal region of a battery cell for secondary batteries is a region on which heat is concentrated, and serves as a path through which flames are discharged outside when a fire breaks out in the battery cell due to a high-temperature phenomenon of the battery cell.

Generally, in many cases, a battery pack is configured to have an open structure in which a bus bar configured to electrically connect battery cells or battery modules received in the battery pack to each other and a connector for connection to an external system are coupled, and a heat dissipation fan configured to discharge heat in the battery pack is installed.

Since the battery pack has a structure in which it is difficult to completely block the movement of materials between the inside and the outside of the battery pack, as described above, flames generated in the battery pack may be easily transmitted to an area adjacent thereto, and air outside the battery pack may be introduced into the battery pack, whereby a state of outbreak of fire may continue.

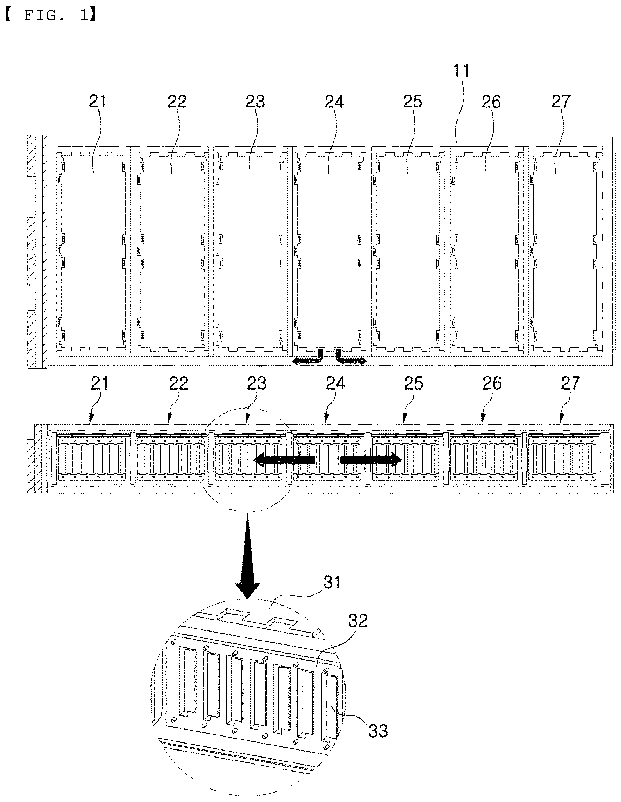

In connection therewith, FIG. 1 is a plan view of a conventional battery pack, from which an upper plate is removed, with a side view of the conventional battery pack, from which a side plate is removed.

Referring to FIG. 1, the battery pack is configured to have a structure in which seven battery modules 21, 22, 23, 24, 25, 26, and 27 are received in a battery pack case 11.

Referring to an enlarged view of the battery module 23, the battery module 23 may be configured to have a structure in which a module case 31 is disposed at the outer surface of a battery cell stack including a plurality of battery cells and electrode leads 33 extending from the battery cells are coupled to a bus bar 32, whereby electrical connection between the battery cells is achieved.

For example, in the case in which a fire breaks out in the battery module 24 due to abnormal operation thereof, flames are transmitted to battery modules adjacent thereto in directions indicated by arrows. All of the battery modules cannot be used due to the diffusion of heat, and a danger due to such a fire increases, whereby safety may become a great issue.

Consequently, a structure in which flames are prevented from being diffused from the battery module in which a first breaks out first is required.

Thereupon, in related industries, various methods of preventing outbreak of fire and heat diffusion in a battery module and a battery pack have been studied in a battery module and a battery pack. Patent Document 1 discloses a battery pack configured to have a structure in which a plurality of battery cells is disposed in a case and in which a cooling air path extending in an upward and downward direction is provided between adjacent ones of the battery cells, wherein a foam heat insulation member that exhibits a heat insulation property is provided above the cooling air path, the heat insulation member being made of thermally expandable graphite, the heat insulation member being configured to thermally swell at a predetermined temperature or higher so as to be introduced into the cooling air path, thereby preventing the extension of thermal runaway between the battery cells.

Patent Document 1 discloses technology used in the battery pack having the cooling air path formed therein, wherein the battery cells are disposed so as to be spaced apart from each other. As a result, Patent Document 1 has problems in that the capacity and energy density of the battery are reduced.

Patent Document 2 discloses a power supply device having a plurality of battery modules disposed adjacent to each other, wherein a fireproof heat insulation case configured to receive batteries has a stacked structure including a metal plate and a heat insulation plate, whereby it is possible to block flames and heat. However, it is difficult to apply this structure to a battery module including a battery cell stack structure in which individual battery cells are arranged in tight contact with each other.

Patent Document 3 discloses a battery pack including a cell module assembly, a first temperature sensor, a pack case, and a control board. However, it is difficult to manufacture a small, lightweight battery pack since the additional temperature sensor and the control board are included in order to control the temperature in a battery.

Therefore, there is a high necessity for technology capable of preventing flames generated due to outbreak of fire or explosion in a battery module and a battery pack from being diffused to a battery module adjacent thereto while a decrease in the capacity of a battery and an increased in the size of the battery module and the battery pack do not become an issue.

### (Prior Art Documents)

(Patent Document 1) Japanese Patent Application Publication No. 2018-098074 (2018.06.21)
(Patent Document 2) Japanese Patent Application Publication No. 2013-251127 (2013.12.12)
(Patent Document 3) Korean Patent Application Publication No. 2018-0085123 (2018.07.26)
   JP 2013 246920 discloses a battery cooling structure. KR 2013 0064031 discloses a secondary battery with improved safety. WO2018221004 discloses a battery pack in which a plurality of batteries are arranged.

### [Disclosure]

### [Technical Problem]

The present invention has been made in view of the above problems, and it is an object of the present invention to provide a battery module configured to have a structure in which a heat insulation member is disposed aside a bus bar for electrical connection of electrode leads or a heat insulation member that exhibits a thermal expansion property is applied to at least a portion of the interior of a battery pack case, thereby preventing an amount of oxygen greater than the minimum amount of oxygen necessary for combustion from being introduced into a battery module or a battery pack in which a fire breaks out and flames are generated and preventing heat and the flames in the battery module or the battery pack from being diffused outside, and a battery pack.

### [Technical Solution]

In order to accomplish the above object, a battery module according to the present invention is defined in claim 1.

The present invention also provides a battery pack as defined in claim 3 or claim 4.

In addition, the present invention provides a device as defined in claim 5.

### [Description of Drawings]

FIG. 1 is a plan view of a conventional battery pack, from which an upper plate is removed, with a side view of the conventional battery pack, from which a side plate is removed.
FIG. 2 is a perspective view of a battery pack according to the present invention.
FIG. 3 is a partial sectional view of a battery module having a heat insulation member added thereto.
FIG. 4 is a view showing the state in which the heat insulation member of FIG. 3 swells.
FIG. 5 is a partial sectional view of a battery pack having a heat insulation member added to a side plate thereof.
FIG. 6 is a view showing the state in which the heat insulation member of FIG. 5 swells.
FIG. 7 is a side view showing the state in which a heat insulation member according to a first embodiment is added to a battery pack.
FIG. 8 is a side view showing the state in which a heat insulation member according to a second embodiment is added to a battery pack.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, the details defined in the dependent claims may be applied to all embodiments described in this specification.

A description to embody elements through limitation or addition may be applied to all inventions, unless particularly restricted, and does not limit a specific invention.

Hereinafter, embodiments of the present invention will be described in detail with reference to the accompanying drawings.

The present invention relates to a battery module or a battery pack configured to have a structure in which a heat insulation member is added to the battery module or the battery pack in order to prevent the diffusion of flames in the case in which a fire breaks out in the battery module or the battery pack. Specifically, the battery module may be configured to have a structure including a battery cell stack constituted by a plurality of battery cells stacked in the state of being arranged adjacent to each other, a module case disposed at the outer surface of the battery cell stack so as to fix the battery cell stack, a bus bar configured to electrically connect electrode leads protruding from the battery cells to each other, and a heat insulation member disposed aside the bus bar.

When the temperature in the battery module increases, the temperatures of electrode tabs and the electrode leads increase the most, whereby there is a very high possibility of a fire breaking out at the electrode tabs and the electrode leads.

In addition, the temperature of the bus bar electrically connected to the electrode leads through coupling therewith also abruptly increases.

In the case in which the heat insulation member is disposed aside the bus bar so as to be in tight contact therewith, therefore, it is possible to maximize efficiency in inhibiting heat in the battery module from being discharged outside.

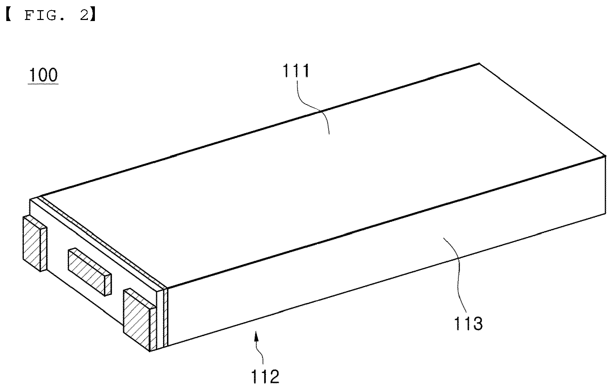

In connection therewith, FIG. 2 is a perspective view of a battery pack according to the present invention.

Referring to FIG. 2, a plurality of battery modules (not shown) is arranged in the battery pack 100 so as to be connected to each other in series and/or in parallel. In order to achieve such arrangement, bus bar frames and bus bars are located at opposite side ends of the battery modules from which electrode leads extend such that the electrode leads are electrically connected to each other.

In general, a battery pack may include a battery pack case, which may be configured to have any of various shapes, such as a mono frame shape, a U-frame shape, or a flat shape, in consideration of the shape, output condition, etc. of a device that is used.

The battery pack 100 includes an upper plate 111 located above a battery module assembly including unit battery modules, a lower plate 112 located under the battery module assembly, and side plates 113 disposed at opposite sides of the battery module assembly, wherein end plates are coupled to opposite ends of the battery pack, excluding the upper plate, the lower plate, and the side plates, in a longitudinal direction thereof in a hermetically sealed state.

However, it is difficult to hermetically seal the battery pack in its entirety, since the battery pack may have a heat dissipation function of discharging heat generated therein outside.

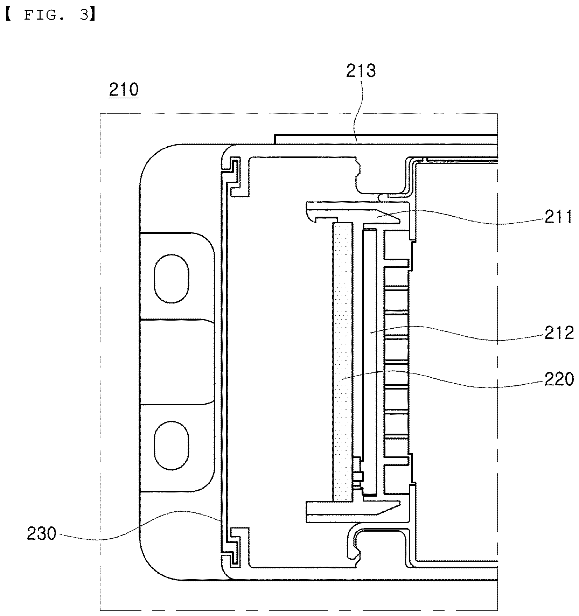

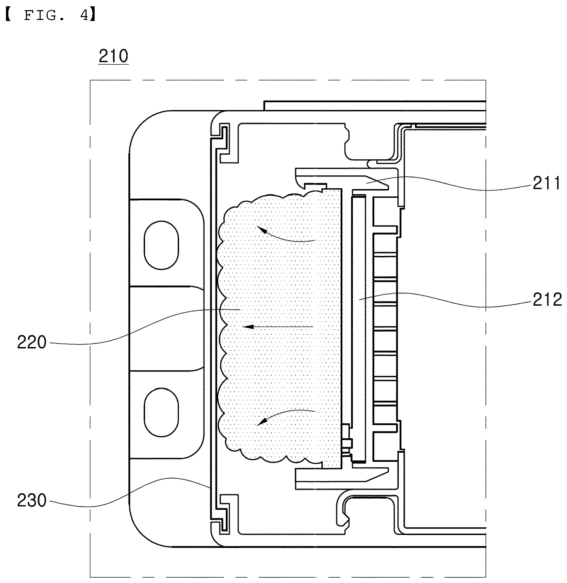

FIG. 3 is a partial sectional view of a battery module having a heat insulation member added thereto, and FIG. 4 is a view showing the state in which the heat insulation member of FIG. 3 swells.

Referring to FIGS. 3 and 4, the battery module 210 includes a module case 213 disposed at the outer surface of a battery cell stack (not shown) constituted by a plurality of battery cells stacked in the state of being arranged adjacent to each other, the module case being configured to fix the battery cell stack, wherein a bus bar 211 having slits formed therein such that electrode leads 212 protruding from the plurality of battery cells extend through the slits is disposed.

A heat insulation member 220 is disposed aside the bus bar 211. The heat insulation member 220 includes a material that exhibits a thermal expansion property.

Specifically, the heat insulation member has a property in which the heat insulation member swells while being deformed in a foam shape when a fire breaks out in the battery module. The swelling heat insulation member may block a supply path of oxygen from outside to minimize the introduction of oxygen necessary for combustion. In addition, the surface area of the heat insulation member may increase due to swelling thereof, whereby it is possible to effectively prevent the diffusion of flames and heat.

For example, the heat insulation member may swell to a size capable of completely blocking the slits in the bus bar, through which the electrode leads extend, whereby it is possible to minimize the introduction of oxygen into the battery module through the slits.

Micropores may be formed in the heat insulation member when the heat insulation member swells, and a very small amount of oxygen may be introduced into the battery module through the micropores. In the case in which a smaller amount of oxygen than the amount of oxygen necessary for combustion is introduced, however, combustion may be inhibited, or flames generated in the battery module may become extinct, and the temperature in the battery module heated by the flames may be prevented from being discharged outside.

The heat insulation member having the above effects may be made of, for example, a silicon-based material or a graphite-based material. In general, a phenomenon in which the silicon-based material flies occurs after the heat insulation member swells, whereby it is difficult to control the amount of oxygen that is introduced. Consequently, it is preferable to use a heat insulation member made of a graphite-based material.

According to the invention, the heat insulation member is configured in a form in which a material that exhibits a thermal expansion property is received in a pouch made of a highly elastic material.

Even though the material that exhibits the thermal expansion property swells due to an increase in the temperature in the battery cells, therefore, the extent of swelling and diffusion is limited, since the material that exhibits the thermal expansion property is received in the pouch made of the highly elastic material. Consequently, it is possible to prevent the material that exhibits the thermal expansion property from disturbing the discharge of heat in the battery module in a normal state while being discharged out of the battery pack or being located between the battery module and a battery pack case.

In another concrete example, the heat insulation member may be configured in the form of a thermal expansion sheet.

The thermal expansion sheet may have a planar flat structure including a material that exhibits a thermal expansion property, or may have a planar flat structure including materials that exhibit different thermal expansion properties arranged in layers.

Alternatively, the overall shape of the thermal expansion sheet is not limited to the planar flat structure but may be a circular shape, an oval shape, or a polygonal shape.

FIG. 4 shows the state in which the heat insulation member 220 disposed outside the bus bar 211 swells. The heat insulation member 220 may swell in directions indicated by arrows to closely fill a space between a side plate 230 of the battery pack and the bus bar 211. Consequently, it is possible to inhibit external air from being introduced into the battery module.

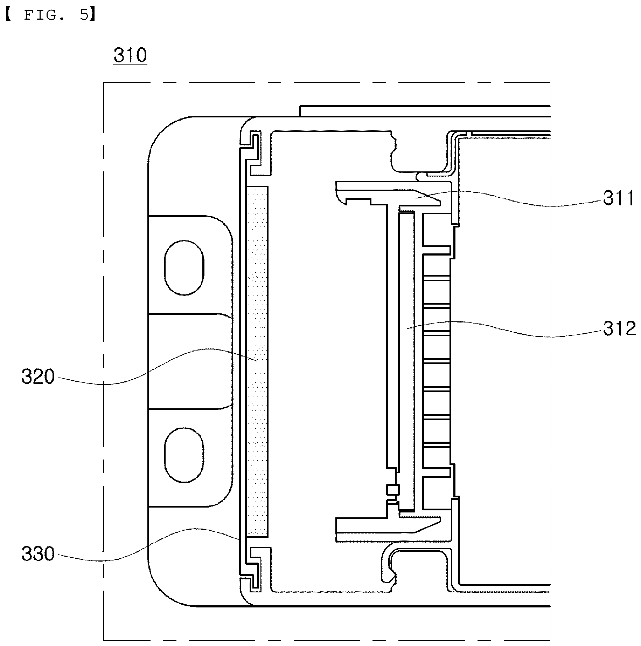

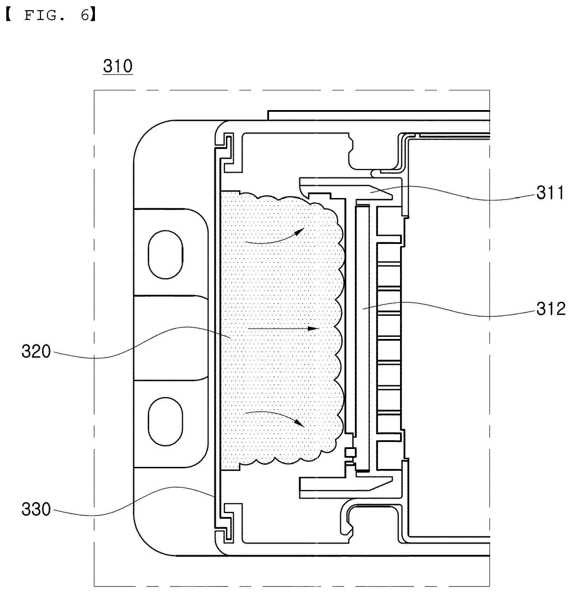

FIG. 5 is a partial sectional view of a battery pack having a heat insulation member added to a side plate thereof, and FIG. 6 is a view showing the state in which the heat insulation member of FIG. 5 swells.

Referring to FIGS. 5 and 6, a side plate 330 of the battery pack is located at a position spaced apart from a bus bar 311, to which an electrode lead 312 of a battery module 310 is connected, and a heat insulation member 320 is attached inside the side plate 330 in a direction toward the bus bar.

When the temperature of the electrode lead increases according to an increase in the temperature in the battery module 310, the heat insulation member 320 swells in directions indicated by arrows due to heat transmitted to the heat insulation member 320, as shown in FIG. 6. The swollen heat insulation member may closely fill a space between the bus bar and the side plate, in the same manner as the heat insulation member shown in FIG. 4. Consequently, external air is prevented from being introduced into the battery module, whereby it is possible to extinguish a fire and to prevent thermal diffusion of the battery module 310, and therefore it is possible to prevent a great fire from breaking out as the result of flames moving to battery modules adjacent thereto.

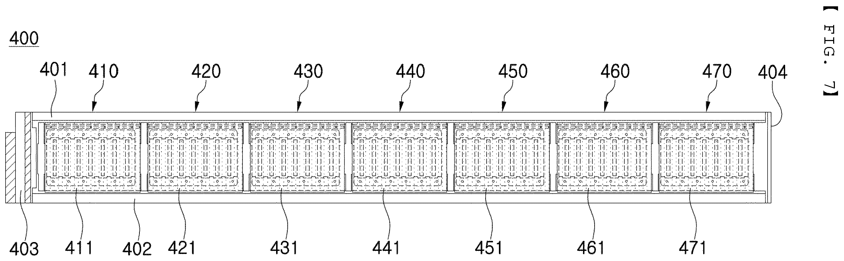

FIG. 7 is a side view showing the state in which a heat insulation member according to a first embodiment is added to a battery pack.

Referring to FIG. 7, the battery pack 400 is configured to have a structure in which a battery module assembly is wrapped by an upper plate 401, a lower plate 402, and end plates 403 and 404. For convenience of understanding, the state in which side surfaces are removed from the battery pack is shown.

The battery module assembly, which includes unit battery modules 410, 420, 430, 440, 450, 460, and 470, is located in the battery pack 400, and heat insulation member units 411, 421, 431, 441, 451, 461, and 471 are disposed respectively between the unit battery modules 410, 420, 430, 440, 450, 460, and 470 and one of the side plates (not shown).

Specifically, the heat insulation member units 411, 421, 431, 441, 451, 461, and 471 may be disposed at the outer surfaces of bus bars of the unit battery modules 410, 420, 430, 440, 450, 460, and 470, respectively, or may be attached to the inner surface of the side plate. Alternatively, one heat insulation member unit may be disposed at the outer surface of one unit battery module.

Although the heat insulation member units are shown as being disposed at the outer surfaces of all of the unit battery modules in FIG. 7, it is a matter of course that the heat insulation member units may be disposed at the outer surfaces of only some of the unit battery modules.

In this case, it is possible to replace some of the heat insulation member units if the lifespan thereof expires as the result of thermal expansion.

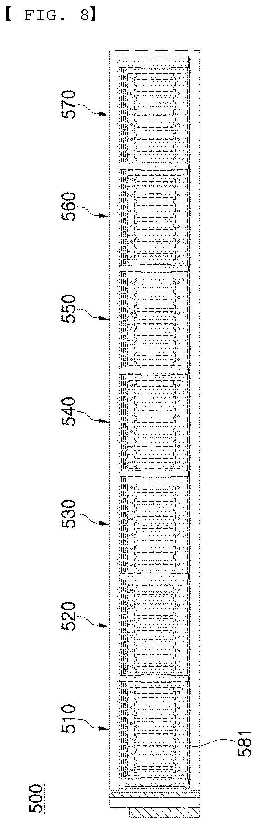

FIG. 8 is a side view showing the state in which a heat insulation member according to a second embodiment is added to a battery pack.

Referring to FIG. 8, a battery module assembly including unit battery modules 510, 520, 530, 540, 550, 560, and 570, is located in the battery pack 500, and a heat insulation member 581 is disposed between the unit battery modules 510, 520, 530, 540, 550, 560, and 570 and a side plate (not shown).

Unlike the heat insulation member units of FIG. 7, the heat insulation member of FIG. 8 has a long integrated structure disposed between the battery module assembly and the side plate.

When a fire breaks out in any one of the unit battery modules, therefore, the heat insulation member may closely fill a space between the battery module assembly and the side plate, whereby it is possible to more effectively prevent flames generated in any one of the unit battery modules from being diffused to the other unit battery modules.

In the battery module and battery pack according to the present invention, as described above, the heat insulation member including the material that exhibits the thermal expansion property is disposed at the portion thereof from which heat is the most extremely generated, and the heat insulation member is rapidly deformed in a foam shape in order to effectively prevent the diffusion of flames.

Those skilled in the art to which the present invention pertains will appreciate that various applications and modifications are possible within the category of the present invention based on the above description.

### (Description of Reference Numerals)

100, 400, 500: Battery packs
11: Battery pack case
21, 22, 23, 24, 25, 26, 27, 210, 310, 410, 420, 430, 440, 450, 460, 470, 510, 520, 530, 540, 550, 560, 570: Battery modules
31: Module case
32: Bus bar
33, 212, 312: Electrode leads
111, 401: Upper plates
112, 402: Lower plates
113, 230, 330: Side plates
211, 311: Bus bars
213: Module case
220, 320, 581: Heat insulation members
403, 404: End plates
411, 421, 431, 441, 451, 461, 471: Heat insulation member units

### [Industrial Applicability]

As is apparent from the above description, a battery module according to the present invention is configured to have a structure in which flames generated in the battery module are prevented from being discharged outside, whereby it is possible to prevent flames from being discharged to a battery module adjacent thereto or to prevent heat from being diffused to the adjacent battery module, and therefore it is possible to prevent a chain of outbreaks of fire.

In addition, it is possible to interrupt the introduction of oxygen into a battery module enveloped in flames, whereby it is possible to rapidly and easily extinguish a fire.

Also, in the case in which a heat insulation member, configured in a form in which a material that exhibits a thermal expansion property is received in a pouch made of a highly elastic material, is applied to the battery module, the extent to which the material that exhibits the thermal expansion property swells is limited to the extent to which the pouch made of the highly elastic material swells. In the case in which the heat insulation member is disposed at the portion of the battery module at which a possibility of outbreak of fire is high, therefore, it is possible to secure an effect of inhibiting outbreak of fire.

## Claims

1. A battery module (210) comprising:
a battery cell stack constituted by a plurality of battery cells stacked in a state of being arranged adjacent to each other;
a module case (213) disposed at an outer surface of the battery cell stack so as to fix the battery cell stack;
a bus bar (211) configured to electrically connect electrode leads (212) protruding from the battery cells to each other; and
a heat insulation member (220) disposed aside the bus bar (211),
the battery module (210) being **characterized in that**
the heat insulation member (220) comprises a material that swells while being deformed in a foam shape when a fire breaks out in the battery module (210), and
wherein the heat insulation member (220) is configured in a form in which the material is received in a pouch made of a highly elastic material.

2. The battery module (210) according to claim 1, wherein the heat insulation member (220) comprises a graphite-based material.

3. A battery pack comprising two or more battery modules (210) according to claim 1 or 2.

4. A battery pack comprising:
- a battery module (310) comprising:
∘ a battery cell stack constituted by a plurality of battery cells stacked in a state of being arranged adjacent to each other;
a module case (213) disposed at an outer surface of the battery cell stack so as to fix the battery cell stack, and
∘ a bus bar (311) to which electrode leads (312) protruding from each of the battery cells are connected,
- a side plate (330) located at a position spaced apart from the bus bar (311), and
- a heat insulation member (320) attached to the side plate (330) in direction toward the bus bar, the battery pack being **characterized in that**
the heat insulation member (320) comprises a material that swells while being deformed in a foam shape when a fire breaks out in the battery module (210), and
wherein the heat insulation member (320) is configured in a form in which the material is received in a pouch made of a highly elastic material.

5. A device comprising the battery pack according to claim 3 or 4.

6. The device according to claim 5, wherein the device is any one of an electric vehicle, a hybrid electric vehicle, and a power storage apparatus.

## Patentansprüche

1. Batteriemodul (210), umfassend:
einen Batteriezellenstapel, welcher durch eine Mehrzahl von Batteriezellen gebildet ist, welche in einem Zustand gestapelt sind, in welchem sie zueinander benachbart angeordnet sind;
ein Modulgehäuse (213), welches derart an einer äußeren Fläche des Batteriezellenstapels angeordnet ist, dass es den Batteriezellenstapel fixiert;
eine Sammelschiene (211), welche dazu eingerichtet ist, Elektrodenleitungen (212), welche von den Batteriezellen vorstehen, elektrisch miteinander zu verbinden; und
ein Wärmeisolierungselement (220), welches neben der Sammelschiene (211) angeordnet ist,
wobei das Batteriemodul (210) **dadurch gekennzeichnet ist, dass**
das Wärmeisolierungselement (220) ein Material umfasst, welches, während es verformt wird, in eine Schaumform quillt, wenn in dem Batteriemodul (210) ein Feuer ausbricht, und
wobei das Wärmeisolierungselement (220) in einer Form eingerichtet ist, in welcher das Material in einem Beutel aufgenommen ist, welcher aus einem hochelastischen Material hergestellt ist.

2. Batteriemodul (210) nach Anspruch 1, wobei das Wärmeisolierungselement (220) ein Material auf Graphitbasis umfasst.

3. Batteriepack, umfassend zwei oder mehr Batteriemodule (210) nach Anspruch 1 oder 2.

4. Batteriepack, umfassend:
- ein Batteriemodul (310), umfassend:
∘ einen Batteriezellenstapel, welcher durch eine Mehrzahl von Batteriezellen gebildet ist, welche in einem Zustand gestapelt sind, in welchem sie zueinander benachbart angeordnet sind;
∘ ein Modulgehäuse (213), welches derart an einer äußeren Fläche des Batteriezellenstapels angeordnet ist, dass es den Batteriezellenstapel fixiert, und
∘ eine Sammelschiene (311), mit welcher Elektrodenleitungen (312) verbunden sind, welche von jeder der Batteriezellen vorstehen,
- eine Seitenplatte (330), welche sich an einer Position befindet, welche von der Sammelschiene (311) beabstandet ist, und
- ein Wärmeisolierungselement (320), welches in einer Richtung zu der Sammelschiene an der Seitenplatte (330) angebracht ist,
wobei der Batteriepack **dadurch gekennzeichnet ist, dass**
das Wärmeisolierungselement (320) ein Material umfasst, welches, während es verformt wird, in eine Schaumform quillt, wenn in dem Batteriemodul (210) ein Feuer ausbricht, und
wobei das Wärmeisolierungselement (320) in einer Form eingerichtet ist, in welcher das Material in einem Beutel aufgenommen ist, welcher aus einem hochelastischen Material hergestellt ist.

5. Vorrichtung, umfassend den Batteriepack nach Anspruch 3 oder 4.

6. Vorrichtung nach Anspruch 5, wobei die Vorrichtung jegliche ist aus einem Elektrofahrzeug, Einem Hybrid-Elektrofahrzeug und einer Energiespeichervorrichtung.

## Revendications

1. Module de batterie (210) comprenant :
un empilement de cellules de batterie constitué d'une pluralité de cellules de batterie empilées dans un état où elles sont agencées adjacentes les unes aux autres ;
un boîtier de module (213) disposé au niveau d'une surface externe de l'empilement de cellules de batterie de manière à fixer l'empilement de cellules de batterie ;
une bus-barre (211) configurée pour connecter électriquement entre eux des fils d'électrode (212) faisant saillie à partir des cellules de batterie ; et
un élément d'isolation thermique (220) disposé à l'écart de la bus-barre (211), le module de batterie (210) étant **caractérisé en ce que**
l'élément d'isolation thermique (220) comprend un matériau qui gonfle tout en étant déformé sous forme de mousse lorsqu'un incendie se déclare dans le module de batterie (210), et
dans lequel l'élément d'isolation thermique (220) est configuré sous une forme dans laquelle le matériau est reçu dans une poche faite d'un matériau hautement élastique.

2. Module de batterie (210) selon la revendication 1, dans lequel l'élément d'isolation thermique (220) comprend un matériau à base de graphite.

3. Bloc-batterie comprenant deux modules de batterie (210) ou plus selon la revendication 1 ou 2.

4. Bloc-batterie comprenant :
- un module de batterie (310), comprenant :
o un empilement de cellules de batterie constitué d'une pluralité de cellules de batterie empilées dans un état où elles sont agencées adjacentes les unes aux autres ;
un boîtier de module (213) disposé au niveau d'une surface externe de l'empilement de cellules de batterie de manière à fixer l'empilement de cellules de batterie, et
o une bus-barre (311) à laquelle sont connectés des fils d'électrode (312) faisant saillie à partir de chacune des cellules de batterie,
- une plaque latérale (330) située à une position espacée de la bus-barre (311), et
- un élément d'isolation thermique (320) fixé à la plaque latérale (330) dans la direction vers la bus-barre,
le bloc-batterie étant **caractérisé en ce que**
l'élément d'isolation thermique (320) comprend un matériau qui gonfle tout en étant déformé sous forme de mousse lorsqu'un incendie se déclare dans le module de batterie (210), et
dans lequel l'élément d'isolation thermique (320) est configuré sous une forme dans laquelle le matériau est reçu dans une poche constituée d'un matériau hautement élastique.

5. Dispositif comprenant le bloc-batterie selon la revendication 3 ou 4.

6. Dispositif selon la revendication 5, dans lequel le dispositif est l'un quelconque parmi un véhicule électrique, un véhicule électrique hybride et un appareil de stockage d'énergie.
